# NEUE EUROPÄISCHE PATENTSCHRIFT

(11) **EP 1 641 687 B2**
(45) Veröffentlichungstag und Bekanntmachung des Hinweises auf die Entscheidung über den Einspruch: **20.11.2013**
(45) Hinweis auf die Patenterteilung: 03.01.2007
(21) Anmeldenummer: 05700832.8
(22) Anmeldetag: 12.01.2005
(51) Int. Cl.: B65G 1/137

(54) **KOMMISSIONIERPLATZ UND VERFAHREN ZUM KOMMISSIONIEREN MIT EINEM LICHTGITTER**
COMMISSIONING AREA AND METHOD FOR COMMISSIONING USING A LIGHT GRILLE
POSTE DE PREPARATION DE COMMANDE ET PROCEDE POUR PREPARER UNE COMMANDE AVEC UNE GRILLE LUMINEUSE

(30) Priorität: 13.01.2004 DE 102004002831
(43) Veröffentlichungstag der Anmeldung: 05.04.2006
(73) Patentinhaber: SSI Schäfer Peem GmbH, 8051 Graz (AT)
(72) Erfinder: SCHÄFER, Gerhard, 57290 Neunkirchen (DE)
(74) Vertreter: Wegener, Markus
(86) Internationale Anmeldenummer: PCT/EP2005/000204
(87) Internationale Veröffentlichungsnummer: WO 2005/068327

(56) Entgegenhaltungen:
- EP-A1- 1 070 673
- DE-A1- 10 128 177
- DE-A1- 10 136 354
- DE-A1- 19 904 775
- DE-U1- 29 806 960
- US-A- 5 781 443
- US-A1- 2002 175 606
- US-B1- 6 275 152

## Beschreibung

Die vorliegende Erfindung betrifft einen Kommissionierplatz mit einem Puffer für Auftragsbehälter, in die Artikel kommissionierbar sind, wobei der Puffer einen oder mehrere, insbesondere nebeneinander angeordnete, Pufferplätze zur Aufnahme jeweils eines Auftragsbehälters umfasst, mit einer Fördertechnik zum automatisierten Transport von Auftragsbehältern und einer Steuereinrichtung zum Steuern des automatisierten Transports, wobei über dem Puffer ein Strahlfeld vorgesehen ist, um eine kommissionierung von Artikeln per Hand zu überwachen.

Ein solcher Kommissionierplatz ist aus der US 5,781,443 bekannt.

Die vorliegende Erfindung betrifft ferner ein Verfahren zum Kommissionieren an einem Kommissionierplatz von Artikeln in Auftragsbehälter, die in einem Puffer für Auftragsbehälter lagerbar sind.

Solch ein Verfahren und solch ein System sind allgemein im Stand der Technik bekannt.

So zeigt z.B. die DE 101 36 354 A1 ein Kommissionierverfahren und ein Kommissioniersystem mit einem Behälterlager und einem zugeordneten Regalbediengerät zur Aus- bzw. Einlagerung von Lagerbehältern. In den Lagerbehältern befindet sich zu kommissionierendes Gut. Bei dem zu kommissionierenden Gut kann es sich um jegliche Art von Artikeln handeln, die in einem solchen Behälterlager lagerbar sind.

Der Begriff "Behälter" ist nicht beschränkend anzusehen, sondern ist vielmehr ein Beispiel für eine Vielzahl von möglichen Lagereinheiten, wie z.B. Tabletts, Paletten und Ähnliches. Unter dem Begriff "Artikel" sind solche Gegenstände zu verstehen, die in einem Behälterlager bzw. Lagerbehältern lagerbar sind. Artikel können z.B. Arzneimittel, Werkzeugteile oder Ähnliches sein, die beispielsweise von Kunden in beliebiger Anzahl und Vielzahl bestellt werden können. Die verschiedenen bestellten Artikel werden dann in einem so genannten Auftrag zusammengefasst, wobei die Artikel des Auftrags in der Regel in einen oder gegebenenfalls mehrere Auftragsbehälter kommissioniert werden, der bzw. die dem Kunden dann geliefert wird bzw. werden.

Unter einem Kommissionierplatz wird in einem Kommissioniersystem ein Ort verstanden, wo eine Kommissionierperson Artikel, die in den Lagerbehältern gelagert sind, entnimmt, um diese dann in bereitgestellte Auftragsbehälter abzulegen.

Unter einem "Auftragsbehälter" wird ein Behälter verstanden, in den zu kommissionierendes Gut bzw. Artikel gelegt wird bzw. werden. Ein Auftragsbehälter kann eine Vielzahl von verschiedenen Artikeln aufnehmen, bis der ihm zugeordnete Auftrag abgearbeitet ist, d.h. bis alle zum Auftrag gehörenden Artikel aus dem Lager zum Kommissionierplatz transportiert sind und dort von der Kommissionierperson in den entsprechenden Auftragsbehälter gelegt worden sind.

In jüngster Zeit ist man dazu übergegangen, den Kommissioniervorgang nach dem Prinzip "Ware zum Mann" zu gestalten. Beim Prinzip "Ware zum Mann" ist der Kommissionierperson ein fester Arbeitsplatz zugewiesen, von dem sie sich so wenig und selten wie möglich weg bewegt. Die zu kommissionierenden Artikel werden in Lagerbehältern zur Kommissionierperson transportiert. Dies steigert die Effizienz des Gesamtsystems und erfüllt die hohen ergonomischen Anforderungen, die heutzutage immer weiter in den Vordergrund treten.

Die Lagerbehälter werden mittels einer entsprechenden Fördertechnik zu den Kommissionierplätzen transportiert. Die Auftragsbehälter werden am Kommissionierplatz direkt vor der Kommissionierperson "geparkt". Sie werden dabei in einem so genannten Auftragsbehälter-Puffer geparkt, der eine Vielzahl von Auftragsbehältern aufnehmen kann. Der Auftragsbehälter-Puffer ist ebenfalls mit einer, gegebenenfalls weiteren, Fördertechnik verbunden, die leere Auftragsbehälter zum Kommissionierplatz hin und fertig kommissionierte Auftragsbehälter auf ein Signal hin vom Kommissionierplatz weg transportiert.

Dazu ist im Stand der Technik am Kommissionierplatz zum Beispiel eine Drucktaste vorgesehen, mit der die Kommissionierperson einen beendeten Kommissioniervorgang bestätigen kann. So entnimmt die Kommissionierperson z.B. einen Artikel aus einem Lagerbehälter und legt diesen entnommenen Artikel in einen entsprechenden Auftragsbehälter ab. Nachdem der Artikel im Auftragsbehälter abgelegt ist, kann die Kommissionierperson die Taste betätigen, um den Kommissioniervorgang zu bestätigen. Ein übergeordnetes Rechnersystem erfasst dieses Signal und entscheidet dann, ob der Auftrag vollständig abgearbeitet ist oder nicht. Sollte der Auftragsbehälter vollständig kommissioniert sein, so kann der Auftragsbehälter abtransportiert werden.

Diese Vorgehensweise birgt mehrere Nachteile. Zum einen werden Auftragsbehälter aus dem Auftragsbehälter-Puffer abtransportiert, die möglicherweise noch gar nicht abzutransportieren sind. Dies ist insbesondere dann der Fall, wenn die Kommissionierperson die Taste aus Versehen betätigt, obwohl sie den oder die zu kommissionierenden Artikel noch gar nicht in dem entsprechenden Auftragsbehälter abgelegt hat. Zum anderen könnte die Taste betätigt werden, obwohl eine nicht ausreichende Anzahl von Artikeln in den Auftragsbehälter gegeben wurde, so dass der Auftrag gegenüber dem Rechnersystem als vollständig abgearbeitet ausgegeben wird, obwohl er dies nicht ist.

Ferner besteht ein nicht unerhebliches Verletzungsrisiko. Um die Geschwindigkeit des Kommissioniervorgangs zu steigern, ist es denkbar, dass die Kommissionierperson den zu kommissionierenden Artikel mit der einen Hand in den Auftragsbehälter gibt, während sie mit der anderen Hand den Kommissioniervorgang bestätigt. Dies kann dazu führen, dass die Kommissionierperson eine ihrer Hände in dem zu kommissionierenden Auftragsbehälter hat, während gleichzeitig vom Rechnersystem der Abtransport dieses Auftragsbehälters initiiert wird. Der Auftragsbehälter könnte dann aus dem Auftragsbehälter-Puffer herausbewegt werden, was möglicherweise zu Verletzungen bei der Kommissionierperson führen kann, da diese noch eine ihrer Hände in diesem Auftragsbehälter hat.

Es ist daher eine Aufgabe der vorliegenden Erfindung, einen Kommissionierplatz und ein Verfahren zum Kommissionieren vorzusehen, das erhöhten Sicherheitsanforderungen genügt, was sowohl die körperliche Unversehrtheit als auch die Vermeidung von Kommissionierfehlern betrifft.

Diese Aufgabe wird durch einen Kommissionierplatz gemäß Anspruch 1 gelöst.

Diese Aufgabe wird ferner durch ein Verfahren zum Kommissionieren gemäß Anspruch 8 gelöst.

Durch das Vorsehen eines Strahlfeldes, direkt, über dem Puffer für Auftragsbehälter kann jeder Kommissioniervorgang in zweierlei Hinsicht überwacht werden. Zum einen kann überwacht werden, ob die Kommissionierperson noch eine oder gegebenenfalls beide ihrer Hände im Auftragsbehälter hat, während der Abtransport dieses Auftragsbehälters bereits begonnen hat. Zum anderen kann überwacht werden, ob eine einem Kommissionierauftrag entsprechende Anzahl von zu kommissionierenden Artikeln in den entsprechenden Auftragsbehälter gegeben wurde.

In beiden Fällen wird das Strahlfeld entweder durch die Artikel und/oder die Hände unterbrochen. Diese Unterbrechung kann zum einen genutzt werden, um festzustellen, ob die Kommissionierperson ihre Hände aus dem Auftragsbehälter wieder herausgenommen hat. Bei Herausnahme der Hände ist das Strahlfeld nämlich nicht mehr unterbrochen. Der Auftragsbehälter kann dann gegebenenfalls aus dem Auftragsbehälter-Puffer heraustransportiert werden. Zum anderen kann anhand der Anzahl der Unterbrechungen, die durch Einwurf oder Einlegen der Artikel verursacht werden, überprüft werden, ob die entsprechende Anzahl von zu kommissionierenden Artikeln in den entsprechenden Auftragsbehälter gelegt wurde.

Das Risiko, sich zu verletzen, wird für die Kommissionierperson erheblich reduziert. Ein Abtransport der Auftragsbehälter, während die Kommissionierperson noch ihre Hände in einem Auftragsbehälter hat, ist nicht mehr möglich. Auch ein vorzeitiges Abtransportieren des Auftragsbehälters, ohne dass die erwünschte Anzahl von Artikeln gemäß dem Kommissionierauftrag in den richtigen Auftragsbehälter gegeben worden sind, kann verhindert werden, da durch die Anzahl der Unterbrechungen des Strahlfelds die Anzahl der in den Auftragsbehälter gegebenen Artikel ermittelt werden kann.

Gemäß der Erfindung ist das Strahlfeld direkt über den Öffnungen der Auftragsbehälter angeordnet.

Je näher das Strahlfeld über den Öffnungen des Auftragsbehälters angeordnet ist, desto einfacher lässt sich der Ort, an dem das Strahlfeld durch einen Durchgang einer Hand und/oder eines Artikels unterbrochen wird, rekonstruieren und bei Kenntnis der relativen Positionen des Strahlfeldes zu den im Puffer befindlichen Auftragsbehältern einem Auftragsbehälter zuordnen. Zum anderen ist auch eine bessere zeitliche Zuordnung gegeben, da der Weg, den ein durch das Strahlfeld gegebener Artikel vom Strahlfeld bis zum Boden des Auftragsbehälters zurücklegen muss, kürzer ist.

Besonders bevorzugt ist es, wenn das Strahlfeld eine Vielzahl von Sender/Empfänger-Paaren zum Aussenden von Strahlen und zum Empfangen der ausgesendeten Strahlen umfasst.

Je mehr Strahlen das Strahlfeld bilden, umso besser lässt sich der Ort der Strahlunterbrechung lokalisieren bzw. rekonstruieren. Die Anzahl der Sender/Empfänger-Paare und deren Abstand zueinander steht im direkten Zusammenhang mit dem örtlichen Auflösungsvermögen. Das örtliche Auflösungsvermögen kann zur Zuordnung eines das Strahlfeld unterbrechenden Artikels zu einem im Auftragsbehälter-Puffer befindlichen Auftragsbehälter benutzt werden.

Besonders vorteilhaft ist es, wenn die Sender/Empfänger-Paare in einer Leiste angeordnet sind.

Eine Leiste mit Sender/Empfänger-Paaren lässt sich auf einfache Art und Weise über dem Auftragsbehälter-Puffer installieren. Eine bei der Installation eines Strahlfelds erforderliche Justage lässt sich auf ein Justieren zweier Einheiten, nämlich der Leisten, die die Sender/Empfänger-Paare enthalten, reduzieren, anstatt dass der Sender bzw. Empfänger eines jeden Sender/Empfänger-Paares einzeln aufeinander justiert werden müssten.

Ferner ist es bevorzugt, wenn Sender der Sender/Empfänger-Paare auf einer ersten Leiste und Empfänger der Sender/Empfänger-Paare auf einer zweiten Leiste angeordnet sind, so dass ein Strahlfeld aus, insbesondere parallelen, Strahlen zwischen der ersten und der zweiten Leiste erzeugbar ist.

Auch diese Maßnahme vereinfacht die Justage des Strahlfelds über dem Auftragsbehälter-Puffer.

Außerdem ist es von Vorteil, wenn Sender und Empfänger der Sender/Empfänger-Paare abwechselnd auf ein und derselben Leiste angeordnet sind, um mit einer weiteren, gleich gebildeten Leiste ein gekreuztes Strahlfeld zu erzeugen.

Ein gekreuztes Strahlfeld hat gegenüber einem Strahlfeld aus parallelen Strahlen den Vorteil, dass auch der Raum zwischen den ansonsten parallelen Strahlen überwachbar ist. In Abhängigkeit vom Winkel zwischen den sich kreuzenden Strahlen lässt sich der Überwachungsort, d.h. der Ort, wo sich die Strahlen kreuzen, variieren. Dies ist insbesondere dann der Fall, wenn das Strahlfeld mittels zwei sich gegenüber angeordneter Leisten gebildet wird.

Gemäß des Erfindung ist das Strahlfeld mit Mitteln zum Erfassen und Auswerten eines Signals gekoppelt, das erzeugt wird, wenn ein zu kommissionierender Artikel oder ein Körperteil einer Kommissionierperson einen Strahl des Strahlfeldes unterbricht.

Solch ein Mittel zum Erfassen und Auswerten eines Signals könnte ein Mikrocomputer sein, der beispielsweise direkt mit der Elektronik des Strahlfelds gekoppelt ist, um die empfangenen Signale direkt auszuwerten. Diese Maßnahme entlastet den mit der Überwachung des Gesamtsystems befassten Rechner, indem diesem Arbeitslast abgenommen wird.

Mit den Mitteln zum Erfassen und Auswerten ist op Ort der Unterbrechung, um dem Signal-erzeugenden Artikel den Auftragsbehälter zuzuordnen.

Auf diese Weise kann direkt ermittelt werden, ob die Kommissionierperson den zu kommissionierenden Artikel in den richtigen Auftragsbehälter im Auftragsbehälter-Puffer gegeben hat. Gegebenenfalls können die Mittel zum Erfassen und Auswerten mit dem das Gesamtsystem überwachenden Rechner direkt gekoppelt sein, um eine entsprechende Fehlermeldung abzugeben. Sie können aber auch direkt die Ausgabe eines Signals veranlassen, das der Kommissionierperson mitteilt, dass der aktuelle Kommissioniervorgang fehlerhaft ist bzw. war. Die Kommissionierperson kann somit den Fehler direkt, d.h. vor Ort, korrigieren. Der ansonsten fehlerhaft kommissionierte Auftragsbehälter muss somit nicht zur Fehlerbehebung nachkommissioniert werden, d.h. er muss nicht nochmals in den Gesamtablauf des Systems gebracht werden, was die Gesamteffizienz des Kommissioniersystems erheblich steigert.

Es hat sich als vorteilhaft herausgestellt, wenn die Sender/Empfänger-Paare Infrarotstrahlen oder sichtbares Licht erzeugen.

Infrarotlicht bzw. sichtbares Licht ist für die Augen der Kommissionierperson unschädlich und entspricht somit den heutigen Sicherheitsvorschriften.

Besonders bevorzugt ist es, wenn das Strahlfeld aus mindestens zwei zueinander orthogonalen Sender/Empfänger-Paaren gebildet ist.

Das Vorsehen zueinander orthogonaler Sender/Empfänger-Paare erhöht das bereits oben erwähnte örtliche Auflösungsvermögen in besonderem Maße, da eine zweite Dimension einführbar ist. Somit lässt sich nicht nur eine X- sondern auch eine Y-Komponente eines zweidimensionalen kartesischen Strahlfeldes überwachen.

Gemäß der vorliegenden Erfindung wird ein erstes Freigabesignal ausgegeben, wenn die Strahlen nicht mehr unterbrochen sind.

Die Unterbrechung der Strahlen des Strahlfeldes entspricht unter Umständen dem Zustand, bei dem eine Kommissionierperson eine ihrer Hände in einem der Auftragsbehälter des Auftragsbehälter-Puffers hat. Solange das Signal unterbrochen ist, kann bzw. wird kein Freigabesignal ausgegeben, das den Abtransport des Auftragsbehälters auslösen könnte. Die Gefahr, dass sich die Kommissionierperson verletzt, weil ein Auftragsbehälter abtransportiert wird, in dem die Kommissionierperson ihre Hände hat, wird praktisch auf Null reduziert.

Weiter ist es bevorzugt, wenn das erste Freigabesignal ausgegeben wird, wenn der Auftragsbehälter vollständig kommissioniert ist.

Gemäß einer weiteren bevorzugten Ausführungsform wird ein zweites Freigabesignal ausgegeben, wenn der Auftragsbehälter noch nicht vollständig kommissioniert ist, so dass weitere zu kommissionierende Artikel zum Kommissionierplatz geliefert werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht auf einen Kommissionierplatz gemäß der vorliegenden Erfindung;
- Fig. 2: ein zweidimensionales Strahlfeld für einen Kommissionierplatz gemäß der vorliegenden Erfindung, das durch zwei Sender/Empfänger-Leisten gebildet wird;
- Fig. 3: ein weiteres Strahlfeld für einen Kommissionierplatz gemäß der vorliegenden Erfindung, das von zwei Sender/Empfänger-Leistenpaaren gebildet wird;
- Fig. 4: ein gekreuztes Strahlfeld für einen Kommissionierplatz gemäß der vorliegenden Erfindung; und
- Fig. 5: ein Flussdiagramm des Kommissionierverfahrens gemäß der vorliegenden Erfindung.

Ein Kommissionierplatz gemäß der Erfindung ist nachfolgend im Allgemeinen mit der Bezugsziffer 10 bezeichnet.

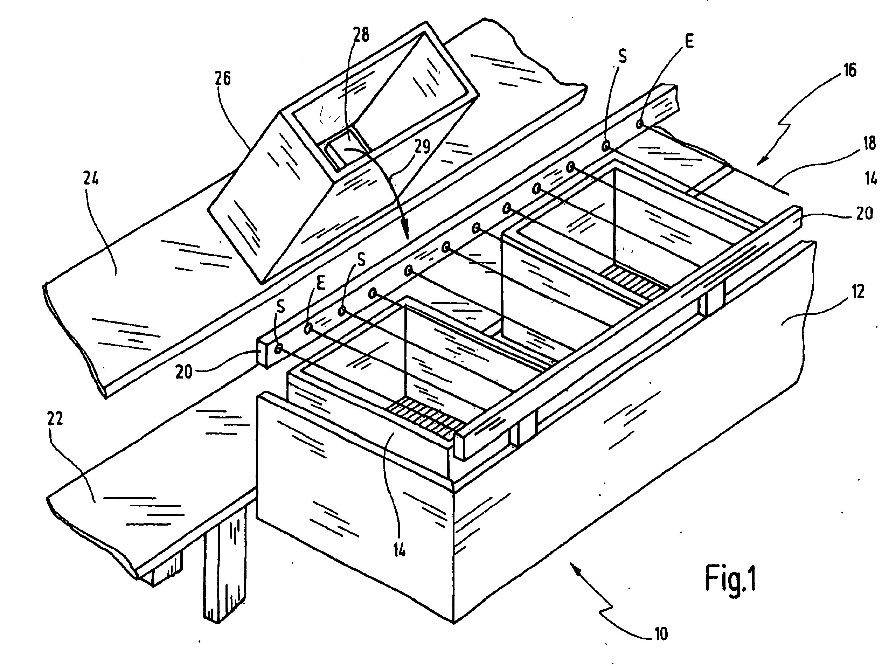

In Fig. 1 ist eine schematische perspektivische Ansicht eines Kommissionierplatzes 10 gemäß der vorliegenden Erfindung gezeigt. Der Kommissionierplatz 10 umfasst einen Puffer 12 für Auftragsbehälter 14. Über dem Puffer 12 für Auftragsbehälter 14 ist ein Strahlfeld 16 angeordnet, das eine Vielzahl von Strahlen 18 umfasst. Die Strahlen 18 werden von Sendern S ausgesendet und von Empfängern E empfangen.

Ein Sender S und ein Empfänger E bilden ein so genanntes Sender/Empfänger-Paar. Sowohl die Sender S als auch die Empfänger E können an bzw. in Leisten 20 befestigt sein. Sie können jedoch auch einzeln vorgesehen werden.

In dem in der Fig. 1 gezeigten Beispiel sind die Sender S und Empfänger E abwechselnd mit gleichem Abstand zueinander an den Leisten 20 angebracht, so dass das Strahlfeld 16 aus parallelen Strahlen 18 gebildet wird. Der Abstand zwischen den Sendern S und Empfängern E einer Leiste 20 kann beliebig gewählt werden.

Je geringer der Abstand der Sender S und Empfänger E ist, desto mehr Sender S und Empfänger E müssen pro konstanter Länge der Leiste 20 vorgesehen werden, und desto größer wird aber auch die mögliche örtliche Auflösung.

Alternativ können auf einer der Leisten 20 jedoch auch ausschließlich Sender S vorgesehen sein, wobei dann auf der gegenüberliegenden Leiste 20 nur Empfänger E vorgesehen sind. Das Strahlfeld 16 muss auch zwingenderweise nicht aus parallelen Strahlen 18 bestehen. Es kann auch aus beliebig zueinander orientierten Strahlen gebildet sein, die jeweils einem Sender/Empfänger-Paar zugeordnet sind.

Des Weiteren erkennt man in der Fig. 1 eine Fördertechnik 22, wie z.B. eine Rollenbahn (nicht dargestellt) oder ein Förderband, mit dem leere Auftragsbehälter 14 zum Puffer 12 transportiert werden können und kommissionierte Auftragsbehälter 14 vom Puffer 12 weg transportiert werden können.

Des Weiteren kann eine weitere Fördertechnik 24 vorgesehen sein, die Lagerbehälter 26 aus einem in der Fig. 1 nicht dargestellten Behälterlager zum Kommissionierplatz 10 transportiert. Die Lagerbehälter 26 enthalten Artikel 28, die zu kommissionieren sind. Dazu entnimmt eine nicht dargestellte Kommissionierperson die Artikel 28 aus dem Lagerbehälter 26 und gibt diese in bereitstehende zugeordnete Auftragsbehälter 14. Ein solcher Kommissioniervorgang ist schematisch durch einen Pfeil 29 angedeutet.

Um den Artikel 28 aus dem Lagerbehälter 26 in den Auftragsbehälter 14 geben zu können, muss die Kommissionierperson das Strahlfeld 16 zumindest mit dem Artikel 28, der kommissioniert werden soll, durchqueren. Bei besonders zerbrechlichen Artikeln wird die Kommissionierperson in der Regel den zerbrechlichen Artikel 28 per Hand in den Auftragsbehälter 14 legen. Dabei greift sie auch mit ihrer Hand durch das Strahlfeld 16.

Somit wird in der Regel zumindest einer der Strahlen 18 des Strahlfelds 16 entweder durch einen eingeworfenen Artikel 28 oder durch eine Hand bzw. durch einen Arm der Kommissionierperson unterbrochen. Solange der Strahl 18 unterbrochen ist, ist klar, dass entweder gerade ein Artikel 28 in einen Auftragsbehälter 14 gegeben wird oder ein Arm bzw. eine Hand durch das Strahlfeld 16 greift.

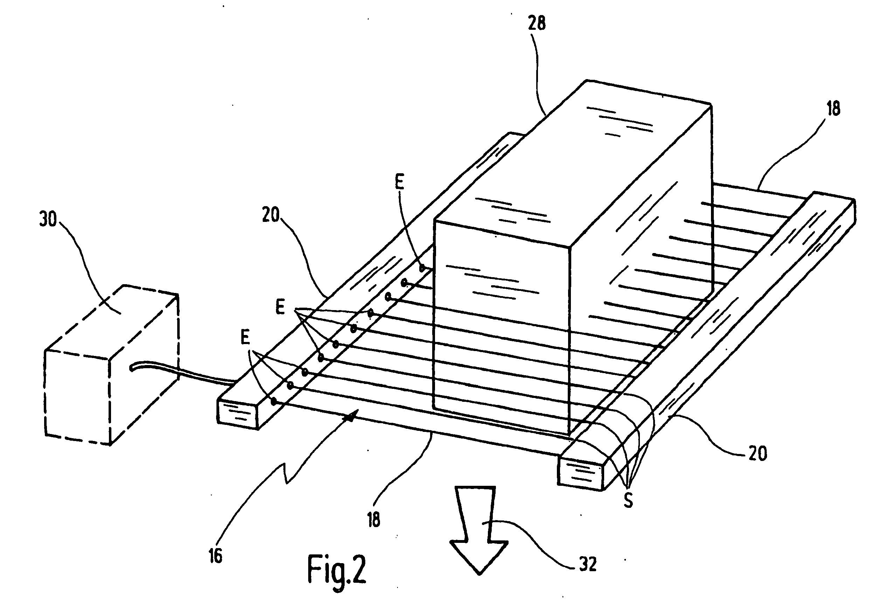

Wie im Zusammenhang mit Fig. 2 erläutert werden wird, können eine oder mehrere Leisten 20 mit Mitteln 30 zum Erfassen und Auswerten von Unterbrechungssignalen verbunden sein. Die Leisten 20 können die Mittel 30 integriert haben. Mit diesen Mitteln 30 lässt sich die Unterbrechung eines Strahls 18 erfassen. Später noch zu erläuternde Signale können in Abhängigkeit davon ausgegeben werden. Auch der Ort der Unterbrechung kann durch die Mittel 30 ermittelt werden.

Fig. 2 zeigt eine exemplarische Ausgestaltung des Strahlfelds 16, wobei die linke Leiste 20 ausschließlich Empfänger aufweist und die rechte Leiste 20 ausschließlich Sender aufweist. Die rechte Leiste 20 ist mit den Mitteln 30 zum Erfassen und Auswerten von Unterbrechungssignalen gekoppelt. Die Mittel 30 sind nicht genauer dargestellt. Durch das Strahlfeld 16 der Fig. 2 wird ein Artikel 28 in Richtung eines Pfeils 32 hindurchgeführt.

Man erkennt deutlich, dass die Strahlen 18 in dem Bereich des Strahlfeldes 16, in dem sich der Artikel 28 befindet, unterbrochen sind. Auf der linken Leiste 20 erkennt man noch einen Empfänger E, der auf Grund des sich im Strahlengang befindlichen Artikels 28 keinen Strahl 18 empfängt. Der Strahl 18 dieses Sender/Empfänger-Paars ist somit unterbrochen. Diese Unterbrechung kann von den Mitteln 30 erfasst und ausgewertet werden. Man erhält unter anderem somit eine Information über den Ort der Unterbrechung. Bei Kenntnis der relativen Lage der Auftragsbehälter 14, die hier nicht dargestellt sind, zum Strahlfeld 16, lässt sich somit der Ort der Unterbrechung zumindest einem der Auftragsbehälter 14 zuordnen.

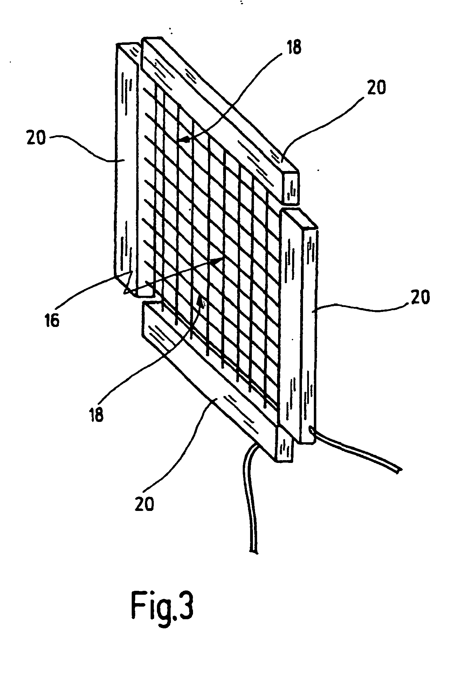

Um die örtliche Zuordnung noch zu verbessern, kann ein weiteres Paar aus Leisten 20 vorzugsweise im Wesentlichen orthogonal zu dem ersten Paar von Leisten 20 orientiert werden. Eine solche Anordnung ist in der Fig. 3 dargestellt. Sollte es wünschenswert sein, auch Informationen über die dritte Dimension, d.h. die Höhe, zu erhalten, so könnten mehrere Strahlfelder 16 übereinander angeordnet werden. Eine solche Anordnung ist in den Figuren nicht dargestellt.

Auch die Art und Weise, wie die Strahlen 18 im Strahlfeld 16 zueinander orientiert sind, kann beliebig gewählt werden.

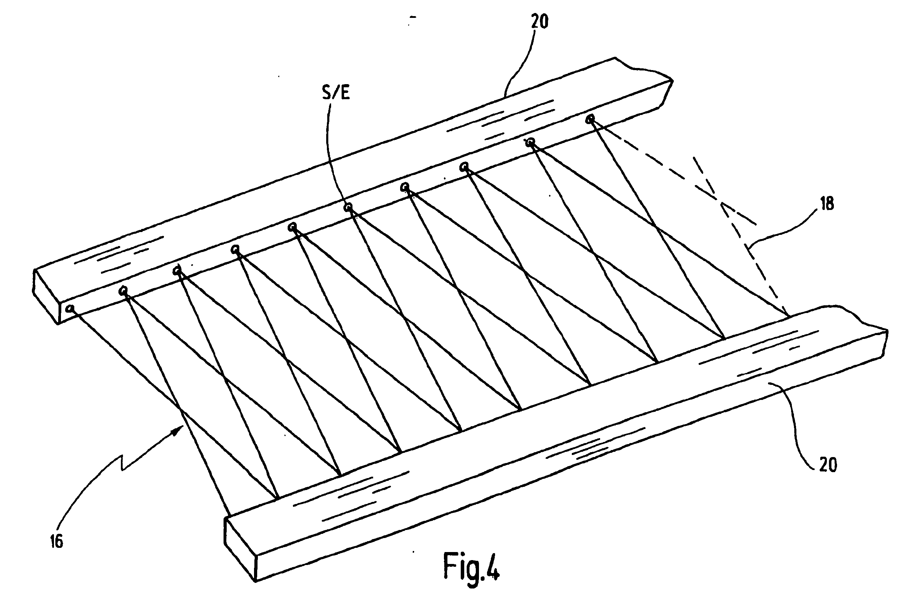

In Fig. 4 ist beispielsweise ein gekreuztes Strahlfeld 16 dargestellt. Hierbei sind jeweils ein Sender und Empfänger direkt benachbart zueinander auf der gleichen Leiste angeordnet.

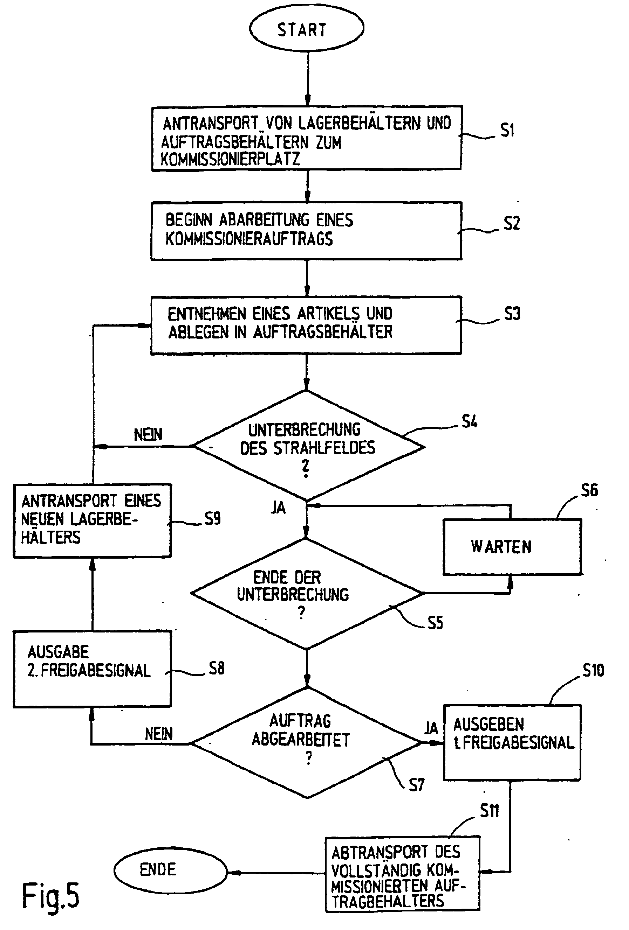

Bezug nehmend auf Fig. 5 wird das Verfahren zum Kommissionieren gemäß der vorliegenden Erfindung beschrieben.

In einem ersten Schritt S1 werden die Lagerbehälter 26 beispielsweise über die in Fig. 1 dargestellte Fördertechnik 24 zum Kommissionierplatz 10 gemäß der Erfindung transportiert. Leere Auftragsbehälter 14 werden z.B. mittels der in Fig. 1 dargestellten Fördertechnik 22 zum Puffer 12 für Auftragsbehälter 14 transportiert. Eine in Fig. 1 nicht dargestellte Einschleus-/Ausschleusvorrichtung sorgt dafür, dass die Auftragsbehälter 14 in bzw. aus dem Puffer 12 bewegt werden.

In einem Schritt S2 wird mit der Abarbeitung eines Kommissionierauftrags begonnen. Ein Kommissionierauftrag kann aus mehreren zu kommissionierenden Artikeln 28 bestehen. Die Artikel 28 können gleicher oder unterschiedlicher Art sein. In der Regel enthalten die Lagerbehälter 26 jedoch nur Artikel 28 des gleichen Typs. Sollten mehrere verschiedene Artikeltypen für einen Kommissionierauftrag zu kommissionieren sein, kann es erforderlich sein, dass mehrere Lagerbehälter 26 über die Fördertechnik 24 zum Kommissionierplatz 10 transportiert werden müssen. Die Kommissionierperson entnimmt dann den Lagerbehältern 26 die dem Kommissionierauftrag entsprechende Anzahl von Artikeln 28. Dazu kann eine Anzeige im Bereich des Kommissionierplatzes 10 vorgesehen sein, die in Fig. 1 ebenfalls nicht dargestellt ist und der Kommissionierperson angibt, wie viel Artikel 28 aus dem Lagerbehälter 26 zu entnehmen sind.

Ferner können die Lagerbehälter 26 als solche zusätzlich unterteilt sein, so dass sich auch mehrere Artikeltypen in ein und demselben Lagerbehälter 26 befinden können. Um der Kommissionierperson anzugeben, welchen der verschiedenen Artikeltypen sie zu kommissionieren hat, kann optional ein in Fig. 1 ebenfalls nicht gezeigtes optisches Anzeigesystem für den Kommissionierplatz 10 vorgesehen sein. Dazu könnte z.B. von oben ein Lichtstrahl in den Lagerbehälter 26 auf den entsprechenden Artikeltyp zeigen. Ähnliches gilt für die Angabe des Ziels, d.h. des Auftragsbehälters 14, sollten sich mehrere Auftragsbehälter 14 im Puffer 12 befinden.

In einem weiteren Schritt S3 entnimmt die Kommissionierperson dem Lagerbehälter 26 den gewünschten Artikel 28 und legt ihn in den vorherbestimmten Auftragsbehälter 14.

Die zu kommissionierenden Artikeltypen selbst lassen sich in zwei Kategorien unterteilen, was die Art und Weise betrifft, wie sie kommissioniert werden müssen. Dies ist zum einen die so genannte "Dropable"-Kategorie, und zum anderen die "Non-dropable"-Kategorie. "Dropable"-Artikel können in die Auftragsbehälter 16 durch das in Fig. 1 dargestellte Strahlfeld 16 geworfen werden. "Non-dropable"-Artikel müssen von der Kommissionierperson per Hand in den Auftragsbehälter 14 gegeben bzw. gelegt werden.

In beiden Fällen wird jedoch das Strahlfeld 16 entweder von einem Artikel 28 allein oder von einem Artikel 28 in Verbindung mit zumindest einer Hand bzw. einem Arm der Kommissionierperson durchquert.

In einem weiteren Schritt S4 wird von den Mitteln 30 zum Erfassen und Auswerten beispielsweise in beliebig wählbaren periodischen zeitlichen Abständen abgefragt, ob eine Unterbrechung des Strahlfeldes 16 vorliegt. Diese Abfrage kann jedoch auch von dem dem Kommissioniersystem überlagerten Lagerverwaltungssystem, das durch einen Großrechner oder PC implementiert sein kann, übernommen werden.

Wird dabei festgestellt, dass das Strahlfeld 16 nicht unterbrochen wurde, weiß das System, dass der zu kommissionierende Artikel 28 sich noch nicht in dem ihm zugeordneten Auftragsbehälter 14 befindet. Der Schritt S3 des Entnehmens des Artikels 28 und des Ablegens in den entsprechenden Auftragsbehälter 14 ist somit noch nicht abgeschlossen.

Ergibt die Abfrage S4 jedoch, dass das Strahlfeld 16 unterbrochen ist, schließt sich in einem weiteren Schritt S5 eine weitere Abfrage an, mit der das (zeitliche) Ende der Unterbrechung abgefragt wird.

Ergibt die Abfrage S5, dass das Strahlfeld 16 weiterhin unterbrochen ist, so wartet das System in einem weiteren Schritt S6 das Ende der Unterbrechung ab.

Ergibt die Abfrage S5 jedoch, dass die Unterbrechung beendet ist, so wird in einer weiteren Abfrage S7 ermittelt, ob der Kommissionierauftrag, der am Kommissionierplatz 10 auszuführen ist, vollständig beendet ist. Dies bedeutet jedoch nicht, dass der Kommissionierauftrag vollständig abgeschlossen sein muss. So ist es z.B. auch möglich, dass ein Auftragsbehälter 14 lediglich teilweise an einem ersten Kommissionierplatz 10 kommissioniert wird, um anschließend zu einem anderen Kommissionierplatz 10 geleitet zu werden, wo der Kommissionierauftrag endgültig fertig kommissioniert werden kann.

Wird bei der Abfrage S7 festgestellt, dass der Kommissionierauftrag an dem konkreten Kommissionierplatz 10 noch nicht fertig abgearbeitet ist, so kann beispielsweise von den Mitteln 30 in einem Schritt S8 ein Freigabesignal ausgegeben werden.

Auf Grund des im Schritt S8 ausgegebenen Freigabesignals wird in einem weiteren Schritt S9 ein neuer Lagerbehälter 26 zum Kommissionierplatz 10 transportiert, der weitere zum Kommissionierauftrag gehörige Artikel 28 enthält. Der Kommissioniervorgang wird dann beim Schritt S3 fortgesetzt.

Ergibt die Abfrage S7 jedoch, dass der Kommissionierauftrag (an diesem Kommissionierplatz 10) vollständig abgearbeitet ist, so wird in einem weiteren Schritt S10 ein weiteres Freigabesignal ausgegeben. Das weitere Freigabesignal ermöglicht es, dass der Auftragsbehälter 14, der nun vollständig kommissioniert ist, aus dem Puffer 12 abtransportiert werden kann. Dies ist in einem Schritt S11 der Fig. 5 dargestellt. Der Kommissioniervorgang ist somit beendet. Es versteht sich, dass der Vorgang nun von vorne beginnen kann.

## Patentansprüche

1. Kommissionierplatz (10) mit einem Puffer (12) für Auftragsbehälter (14), in die Artikel kommissionierbar sind, wobei der Puffer (12) mehrere, insbesondere nebeneinander angeordnete, Pufferplätze zur Aufnahme jeweils eines Auftragsbehälters (14) umfasst, mit einer Fördertechnik (22) zum automatisierten Transport von Auftragsbehältern und einer Steuereinrichtung zum Steuern des automatisierten Transports, **dadurch gekennzeichnet dass** über dem Puffer (12) ein Strahlfeld (16) vorgesehen ist, um eine Kommissionierung von Artikeln (28) per Hand zu überwachen, dass das Strahlfeld (16) direkt über den Öffnungen der Auftragsbehälter angeordnet ist, dass ein Signal erzeugt wird, wenn der Strahl (18) des Strahlfeldes (16) unterbrochen wird, und dass die Steuereinrichtung eingerichtet ist, in Abhängigkeit von dem Unterbrechungssignal, einen Abtransport eines Auftragsbehälters mittels eines ersten Freigabesignals, das ein Abtransportieren des Auftragsbehälters erlaubt, aus dem Puffer zu veranlassen, wobei das Strahlfeld (16) mit Mitteln (30) zum Erfassen und Auswerten des Signals gekoppelt ist, das erzeugt wird, wenn ein zu kommissionierender Artikel (28) oder ein Körperteil einer Kommissionierperson einen Strahl (18) des Strahlfeldes (16) unterbricht, wobei mit den Mitteln (30) zum Erfassen und Auswerten ein Ort der Unterbrechung ermittelbar ist, um dem Signal-erzeugenden Artikel (28) einen Auftragsbehälter (14) zuzuordnen.

2. Kommissionierplatz nach Anspruch 1, durch gekennzeichnet, dass das Strahlfeld (16) eine Vielzahl von Sender/Empfänger-Paaren zum Ausenden von Strahlen (18) und zum Empfangen der ausgesendeten Strahlen (18) umfasst.

3. Kommissionierplatz nach Anspruch 2, **dadurch gekennzeichnet, dass** die Sender/Empfänger-Paare in einer Leiste (20) angeordnet sind.

4. Kommissionierplatz nach Anspruch 3, **dadurch gekennzeichnet, dass** Sender (S) der Sender/Empfänger-Paare auf einer ersten Leiste (20) und Empfänger (E) der Sender/Empfänger-Paare auf einer zweiten Leiste (20) angeordnet sind, so dass ein Stahlfeld (16) aus, insbesondere parallelen, Strahlen (18) zwischen der ersten und der zweiten Leiste (20) erzeugbar ist.

5. Kommissionierplatz nach Anspruch 3, **dadurch gekennzeichnet, dass** Sender (S) und Empfänger (E) der Sender/Empfänger-Paare abwechselnd auf ein und derselben Leiste (20) angeordnet sind, um mit einer weiteren, gleich gebildeten Leiste (20) ein gekreuztes Strahlfeld (16) zu erzeugen.

6. Kommissionierplatz nach einem der vorherigen Ansprüche, **dadurch gekennzeichnet, dass** die Sender/Empfänger-Paare Infrarotstrahlen oder sichtbares Licht erzeugen.

7. Kommissionierplatz nach einem der vorherigen Ansprüche, **dadurch gekennzeichnet, dass** das Strahlfeld (16) aus mindestens zwei zueinander orthogonalen Sender/Empfänger-Paaren gebildet ist.

8. Verfahren zum Kommissionieren an einem Kommissionierplatz, der gemäß einem der Ansprüche 1 bis 7 ausgebildet ist, von Artikeln (28) in Auftragsbehälter (14), die in einem Puffer (12) für mehrere Auftragsbehälter (14) lagerbar sind, **gekennzeichnet durch** Erzeugen eines Strahlfeldes (16) über dem Puffer (12), Erfassen eines Unterbrechungssignals, das **durch** eine Unterbrechung von Strahlen (18) des Strahlfeldes (16) erzeugt wird, wobei mit den Mitteln (30) zum Erfassen und Auswerten ein Ort des Unterbrechung ermittelt wird, um dem Signalerzeugenden Artikel einen Auftragsbehälter zuzuordnen, und Ausgeben eines ersten Freigabesignals in Abhängigheit von dem Unterbrechungssignal, das ein Abtransportieren des Auftragsbehälters (14) aus dem Puffer (12) erlaubt.

9. Verfahren nach Anspruch 8, **dadurch gekennzeichnet, dass** die Strahlen (18) des Strahlenfeldes (16) durch zu kommissionierende Artikel und/oder eine Hand einer Kommissionierperson unterbrochen werden.

10. Verfahren nach Anspruch 8 oder 9, **dadurch gekennzeichnet, dass** das erste Freigabesignal ausgegeben wird, wenn die Strahlen (18) nicht mehr unterbrochen sind.

11. Verfahren nach Anspruch 10, **dadurch gekennzeichnet, dass** das erste Freigabesignal ausgegeben wird, wenn der Auftragsbehälter (14) vollständig kommissioniert ist.

12. Verfahren nach Anspruch 11, **dadurch gekennzeichnet, dass** ein zweites Freigabesignal ausgegeben wird, wenn der Auftragsbehälter (14) noch nicht vollständig kommissioniert ist, so dass weitere zu kommissionierende Artikel zum Kommissionierplatz (10) lieferbar sind.

13. Kommissionieranlage mit einem Kommissionierplatz nach einem der Ansprüche 1 bis 7.

## Claims

1. An order-picking station (10) comprising a buffer (12) for order containers (14) into which articles can be picked, said buffer (12) including several buffer spaces, particularly arranged side-by-side, for respectively receiving one order container (14), a conveyor system (22) for automatically transporting order containers, and a controlling device for controlling the automatized transport, **characterized in that** above said buffer (12) a field (16) of beams is provided for monitoring manual picking process of articles (28), **in that** the field (16) of beams is arranged directly above the openings of the order containers, **in that** a signal is generated if the beam (18) of the field (16) of beams is interrupted, and **in that** the controlling device is adapted to cause, by means of a first enabling signal allowing an order container to be transported away, a transport of the order container from the buffer in dependence on the interruption signal, wherein the field (16) of beams is coupled to means (30) for detecting and evaluating the signal which is generated if an article (28) to be picked or if a part of a body of a picking person interrupts a beam (18) of the field (16) of beams, wherein the means (30) for detecting and evaluating can determine a location of the interruption for assigning an order container (14) to the article (28) generating the signal.

2. The order-picking station of claim 1, **characterized in that** the field (16) of beams includes a plurality of transmitter and receiver pairs for transmitting beams (18) and receiving the transmitted beams (18).

3. The order-picking station of claim 2, **characterized in that** the transmitter and receiver pairs are arranged in a strip (20).

4. The order-picking station of claim 3, **characterized in that** transmitters (S) of said transmitter and receiver pairs are arranged on a first strip (20), and receivers (E) of the transmitter and receiver pairs are arranged on a second strip (20) such that a field (16) of beams can be generated by beams (18), particularly being parallel, between the first and second strips (20).

5. The order-picking station of claim 3, **characterized in that** transmitters (S) and receivers (E) of the transmitter and receiver pairs are arranged alternately on one and the same strip (20) for generating a crossed field (16) of beams with a further strip (20) being formed equally.

6. The order-picking station of any of the proceeding claims, **characterized in that** the transmitter and receiver pairs generate infrared beams or visible light.

7. The order-picking station of any of the proceeding claims, **characterized in that** the field (16) of beams is formed at least by two transmitter and receiver pairs being orthogonal to each other.

8. A method for order-picking, at a picking station which is formed according to any of the claims 1 to 7, for picking articles (28) into order containers (14) which are storable in a buffer (12) for several order containers (14), **characterized by** generating a field (16) of beams above the buffer (12), detecting an interruption signal which is generated by interrupting beams (18) of the field (16) of beams, wherein the means (30) for detecting and evaluating a location of the interruption is determined for assigning one of the order containers to the signal-generating article, and outputting a first enabling signal in dependence on the interruption signal for allowing retrieval of the order container (14) from the buffer (12).

9. The method of claim 8, **characterized in that** the beams (18) of the field (16) of beams are interrupted by articles to be picked and/or a picking person's hand.

10. The method of claims 8 or 9, **characterized in that** the first enabling signal is output if the beams (18) are no longer interrupted.

11. The method of claim 10, **characterized in that** the first enabling signal is output if the order container (14) is completely order-picked.

12. The method of claim 11, **characterized in that** a second enabling signal is output if the order container (14) is not yet completely order-picked so that further articles to be picked can be supplied to the order-picking station (10).

13. An order-picking system having an order-picking station according to any of claims 1 to 7.

## Revendications

1. Poste de préparation de commandes (10) comprenant un tampon (12) pour des récipients de commande (14), dans lesquels des articles peuvent être préparés pour une commande, sachant que le tampon (12) comprend plusieurs emplacements tampon, disposés en particulier les uns à côté des autres, servant à recevoir respectivement un récipient de commande (14), comprenant un équipement technique de convoyage (22) servant au transport automatisé de récipients de commande et un système de commande servant à commander le transport automatisé, **caractérisé en ce qu'**un champ de faisceaux (16) est prévu au-dessus du tampon (12) afin de surveiller à la main une préparation de commande d'articles (28), **en ce que** le champ de faisceaux (16) est disposé directement au-dessus des ouvertures des récipients de commande, **en ce qu'**un signal est généré lorsque le faisceau (18) du champ de faisceaux (16) est interrompu, et **en ce que** le système de commande est configuré pour entraîner, en fonction du signal d'interruption, l'évacuation d'un récipient de commande du tampon au moyen d'un premier signal de libération, qui permet une évacuation du récipient de commande, sachant que le champ de faisceaux (16) est couplé à des moyens (30) servant à détecter et à analyser le signal qui est généré lorsqu'un article (28) à préparer pour une commande ou une partie du corps d'une personne en charge de la préparation des commandes interrompt un faisceau (18) du champ de faisceaux (16), sachant que les moyens (30) de détection et d'analyse permettent de déterminer un endroit de l'interruption afin d'associer un récipient de commande (14) à l'article (28) générant le signal.

2. Poste de préparation de commandes selon la revendication 1, **caractérisé en ce que** le champ de faisceaux (16) comprend une pluralité de paires d'émetteurs/de récepteurs servant à émettre des faisceaux (18) et servant à recevoir les faisceaux (18) émis.

3. Poste de préparation de commandes selon la revendication 2, **caractérisé en ce que** les paires d'émetteurs/de récepteurs sont disposées dans un rebord (20).

4. Poste de préparation de commandes selon la revendication 3, **caractérisé en ce que** les émetteurs (S) des paires d'émetteurs/de récepteurs sont disposés sur un premier rebord (20) et les récepteurs (E) des paires d'émetteurs/de récepteurs sont disposés sur un deuxième rebord (20) de telle manière qu'un champ de faisceaux (16) peut être généré à partir des faisceaux (18), en particulier parallèles, entre le premier et le deuxième rebord (20).

5. Poste de préparation de commandes selon la revendication 3, **caractérisé en ce que** les émetteurs (S) et les récepteurs (E) des paires d'émetteurs/de récepteurs sont disposés en alternance sur un seul et même rebord (20) afin de générer un champ de faisceaux (16) croisé avec un autre rebord (20) formé de manière similaire.

6. Poste de préparation de commandes selon l'une quelconque des revendications précédentes, **caractérisé en ce que** les paires d'émetteurs/de récepteurs génèrent des rayons infrarouges ou de la lumière visible.

7. Poste de préparation de commandes selon l'une quelconque des revendications précédentes, **caractérisé en ce que** le champ de faisceau (16) est formé à partir au moins de deux paires d'émetteurs/de récepteurs orthogonales l'une par rapport à l'autre.

8. Procédé servant à préparer des commandes sur un poste de préparation de commandes, réalisé selon l'une quelconque des revendications 1 à 7, d'articles (28) dans des récipients de commande (14), qui peuvent être logés dans un tampon (12) pour plusieurs récipients de commande (14), **caractérisé par** les étapes suivantes consistant à générer un champ de faisceaux (16) au-dessus du tampon (12), à détecter un signal d'interruption, qui est généré par une interruption de faisceaux (18) du champ de faisceaux (16), sachant que les moyens (30) de détection et d'analyse permettent de déterminer un endroit de l'interruption et d'associer un récipient de commande à l'article générant le signal, et à émettre un premier signal de libération en fonction du signal d'interruption, lequel signal de libération permet l'évacuation du récipient de commande (14) du tampon (12).

9. Procédé selon la revendication 8, **caractérisé en ce que** les faisceaux (18) du champ de faisceaux (16) sont interrompus par des articles à préparer pour une commande et /ou par une main d'une personne en charge de la préparation des commandes.

10. Procédé selon la revendication 8 ou 9, **caractérisé en ce que** le premier signal de libération est émis lorsque les faisceaux (18) ne sont plus interrompus.

11. Procédé selon la revendication 10, **caractérisé en ce que** le premier signal de libération est émis lorsque le récipient de commande (14) est fin prêt.

12. Procédé selon la revendication 11, **caractérisé en ce qu'**un deuxième signal de libération est émis lorsque le récipient de commande (14) n'est pas encore complètement fin prêt de sorte que des articles supplémentaires pour la préparation de commandes peuvent être livrés au poste de préparation de commandes (10).

13. Installation de préparation de commandes équipée d'une poste de préparation de commandes selon l'une quelconque des revendications 1 à 7.
